# DEMANDE DE BREVET EUROPEEN

(11) **EP 1 089 048 A1**
(43) Date de publication de la demande: **04.04.2001**
(21) Numéro de dépôt: 00402514.4
(22) Date de dépôt: 12.09.2000
(51) Int. Cl.: F28F 9/00

(54) **Dispositif d'assemblage d'une pièce rapportée sur un échangeur de chaleur, en particulier de véhicule automobile**

(30) Priorité: 28.09.1999 FR 9912077
(71) Demandeur: VALEO THERMIQUE MOTEUR, 78321 La Verrière (FR)
(72) Inventeur: Balthazard, Patrick, 02190 Guignicourt (FR)
(74) Mandataire: Bezault, Jean

(57) **Abrégé**

Une pièce rapportée (20) en matière plastique moulée est propre à s'adapter sur une partie réceptrice (24) d'un échangeur de chaleur (10) et est assemblée à cet échangeur de chaleur par une pièce de sertissage (22) propre à envelopper au moins partiellement la pièce rapportée (20) et comportant des moyens de sertissage (34) propres à s'engager dans la partie réceptrice (24) pour solidariser la pièce rapportée à la partie réceptrice. Application notamment à l'assemblage d'une pièce de fixation sur un échangeur de chaleur de véhicule automobile.

## Description

L'invention se rapporte aux échangeurs de chaleur, en particulier pour véhicule automobile.

Elle concerne plus particulièrement un dispositif d'assemblage d'une pièce rapportée sur une partie réceptrice métallique d'un tel échangeur de chaleur.

Les échangeurs de chaleur de ce type comprennent habituellement un faisceau formé d'une multiplicité de tubes et d'ailettes, ainsi qu'au moins une boîte collectrice montée à une extrémité du faisceau. Dans le domaine des véhicules automobiles, l'échangeur de chaleur est généralement soit un radiateur de refroidissement du moteur, soit un radiateur de chauffage de l'habitacle, soit un évaporateur du circuit de climatisation, soit encore un condenseur du circuit de climatisation.

Il est généralement nécessaire de pouvoir assembler au moins une pièce rapportée sur un tel échangeur de chaleur, par exemple pour assurer la fixation de l'échangeur de chaleur sur la structure du véhicule, ou encore pour assurer la fixation d'un accessoire sur l'échangeur de chaleur.

Ainsi, dans la plupart des applications, cette pièce rapportée constitue un élément de fixation.

L'assemblage d'une telle pièce rapportée sur une boîte collectrice de l'échangeur de chaleur ne pose généralement pas de difficulté particulière. En effet, lorsque cette boîte collectrice est en matière plastique, il n'est généralement pas nécessaire de prévoir une pièce rapportée, puisque cette pièce peut être habituellement venue de moulage avec la boîte collectrice elle-même.

De même, lorsque la boîte collectrice est métallique, il est possible de fixer aisément la pièce rapportée soit de façon mécanique, soit encore par brasage.

En fait, on rencontre habituellement des difficultés pour l'assemblage d'une pièce rapportée, lorsque la partie réceptrice métallique fait partie du faisceau de l'échangeur.

En effet, un tel faisceau comprend une multiplicité de tubes et d'ailettes, ces ailettes pouvant être soit des ailettes planes traversées par les tubes du faisceau, soit encore des ailettes en forme d'intercalaires ondulés disposées entre les tubes. Dans ce dernier cas, les ailettes ondulées et les tubes sont assemblés entre eux par brasage.

L'assemblage d'une telle pièce rapportée sur un échangeur de chaleur, en particulier sur le faisceau de celui-ci, pose aussi des difficultés pratiques du fait des formes particulières que doivent posséder ces pièces rapportées.

Lorsque ces pièces sont métalliques, elles peuvent être fixées par rivetage, ce qui pose des problèmes de tenue à la corrosion.

Il est connu aussi de les réaliser en matière plastique, ce qui permet d'obtenir des formes spécifiques, mais la fixation de telles pièces rapportées en matière plastique pose des difficultés pratiques.

L'invention a notamment pour but de surmonter les inconvénients précités.

Elle propose à cet effet un dispositif d'assemblage du type défini en introduction, dans lequel la pièce rapportée est en matière plastique moulée et est propre à s'adapter sur la partie réceptrice, et dans lequel il est prévu en outre une pièce de sertissage propre à envelopper au moins partiellement la pièce rapportée et comportant des moyens de sertissage propres à s'engager dans la partie réceptrice pour solidariser la pièce rapportée à la partie réceptrice.

Ainsi, la pièce rapportée est réalisée en matière plastique et elle est solidarisée à l'échangeur de chaleur par l'intermédiaire d'une pièce de sertissage, de forme spécifique, qui vient s'engager avec la partie réceptrice de l'échangeur de chaleur.

De ce fait, il est possible de réaliser une pièce rapportée, par exemple une pièce de fixation, possédant une forme spécifique obtenue par moulage et susceptible d'être rendue solidaire de l'échangeur de chaleur par l'intermédiaire de la pièce de sertissage.

Ainsi, la pièce rapportée n'est pas assemblée elle-même directement sur l'échangeur de chaleur, mais elle est maintenue solidarisée à celui-ci par la pièce de sertissage, en étant maintenue ainsi "en sandwich".

Avantageusement, la pièce rapportée est propre à s'adapter sur la partie réceptrice par coopération de formes.

Le dispositif de l'invention s'applique en particulier au cas où la partie réceptrice fait partie d'un faisceau de l'échangeur de chaleur.

En ce cas, la pièce rapportée affecte avantageusement une section transversale en U avec une âme et deux branches dépendant de l'âme, de manière à coiffer une face d'extrémité du faisceau.

Dans une forme de réalisation, chacune des branches de la pièce rapportée comporte au moins une ouverture pour le passage des moyens de sertissage.

La pièce rapportée est avantageusement réalisée en polypropylène.

Dans une forme de réalisation préférée, la pièce de sertissage comprend une plaque propre à venir en appui extérieur contre la pièce rapportée et à laquelle se rattachent les moyens de sertissage.

Cette pièce de sertissage est réalisée de préférence dans une matière métallique résistant à la corrosion, par exemple en acier inoxydable.

Les moyens de sertissage comprennent de préférence des pattes repliables.

Selon une autre caractéristique de l'invention, la pièce rapportée est venue de moulage avec au moins une patte de fixation.

Sous un autre aspect, l'invention concerne un échangeur de chaleur équipé d'au moins une pièce rapportée, laquelle est assemblée sur une partie réceptrice de l'échangeur au moyen d'un dispositif d'assemblage tel que défini précédemment.

Dans la description qui suit, faite seulement à titre d'exemple, on se réfère aux dessins annexés, sur lesquels :
- la figure 1 est une vue partielle en perspective d'un échangeur de chaleur équipé d'une pièce rapportée assemblée à celui-ci par un dispositif d'assemblage selon l'invention;
- la figure 2 est une vue en perspective éclatée de la pièce et de la pièce de sertissage avant assemblage ;
- la figure 3 est une vue latérale de la pièce rapportée et de la pièce de sertissage après assemblage ; et
- la figure 4 est une vue de dessus correspondant à la figure 3.

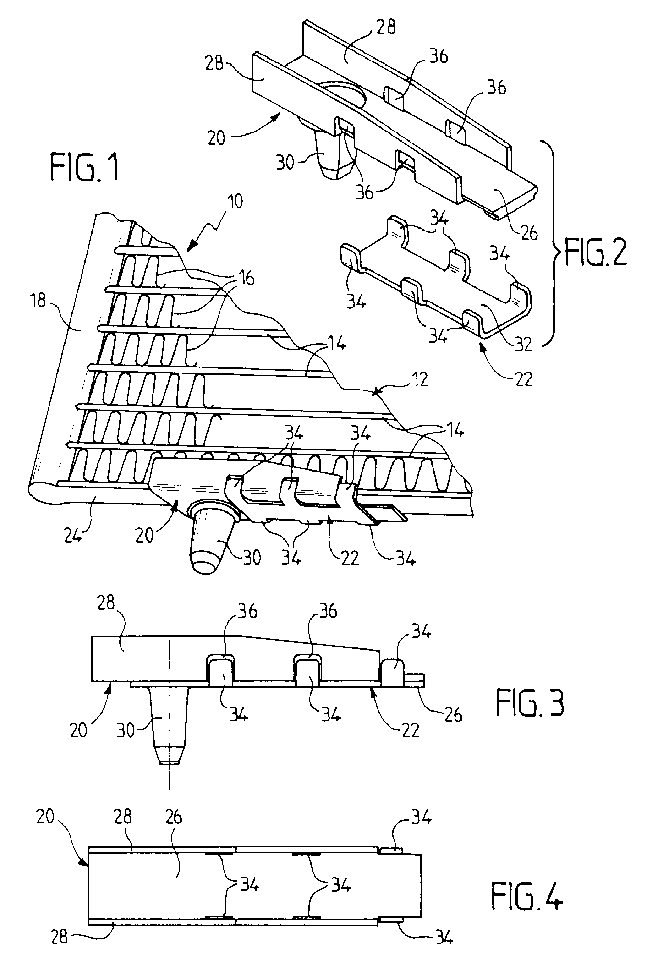

On se réfère tout d'abord à la figure 1 qui montre une partie d'un échangeur de chaleur 10 comprenant un faisceau 12 formé d'une multiplicité de tubes parallèles 14 entre lesquels sont disposées des ailettes 16 réalisées sous la forme d'intercalaires ondulés. Les tubes 14 sont des tubes plats métalliques, avantageusement en aluminium, et les ailettes 16 sont également métalliques, avantageusement en aluminium, et assemblées par brasage aux tubes 14. Le faisceau 12 est assemblé, à l'une au moins de ses extrémités, à une boîte collectrice 18 de forme tubulaire, les tubes 14 ayant des extrémités engagées dans des fentes spécialement aménagées dans la paroi de la boîte collectrice. Les tubes sont également assemblés à la boîte collectrice par brasage.

L'échangeur de chaleur 10 est équipé d'une pièce rapportée 20, dans l'exemple une pièce de fixation, laquelle est assemblée sur le faisceau 12 par l'intermédiaire d'une pièce de sertissage 22.

La pièce rapportée 20 est réalisée en matière plastique, par exemple en polypropylène, et elle est conformée pour s'adapter sur une partie réceptrice qui, dans l'exemple, est une face d'extrémité 24 du faisceau 12, cette face étant constituée ici par une traverse ou joue 14 placée à une extrémité du faisceau.

La pièce rapportée 20 affecte une section transversale en U et elle comporte une âme 26, généralement plane, de forme générale rectangulaire, propre à venir en appui contre la partie réceptrice 24. Dans l'exemple, l'âme 26 possède une largeur qui correspond sensiblement à celle de la face d'extrémité 24, c'est-à-dire d'un tube du faisceau. Cette âme 26 se raccorde, de part et d'autre, à deux branches 28 qui sont sensiblement parallèles et propres à venir encadrer le faisceau 12. L'âme 26 et les deux branches 28 qui en dépendent sont propres à coiffer la face d'extrémité 24 du faisceau, comme on le voit le mieux sur la figure 1.

La pièce rapportée 20 comprend une patte de fixation 30 venue de moulage avec elle. Cette patte de fixation a la forme d'un pion qui se rattache extérieurement à l'âme 26 de la pièce rapportée 20. Ce pion est propre à s'engager dans une ouverture de forme correspondante (non représentée) faisant partie, par exemple, de la structure d'un véhicule automobile pour permettre la fixation de l'échangeur de chaleur sur cette structure.

La pièce de sertissage 22 est conçue pour solidariser la pièce rapportée 20 sur la partie réceptrice 24 de l'échangeur de chaleur. La pièce de sertissage 22 comprend (figures 1 à 4) une plaque 32 de forme générale rectangulaire propre à venir en appui extérieur contre la pièce rapportée 20, et plus particulièrement contre l'âme 26 de cette dernière. Cette pièce de sertissage est réalisée dans une matière métallique résistant à la corrosion, par exemple en acier inoxydable.

La plaque 32 est munie, de chaque côté, de trois pattes de sertissage 34 susceptibles d'être repliées et rabattues sensiblement à angle droit. Chacune des branches 28 de la pièce rapportée 20 comprend (figures 2 et 3) deux ouvertures 36 propres à laisser passage à des pattes de sertissage 34 de la pièce de sertissage 22. Les deux autres pattes de sertissage, qui sont également disposées en vis-à-vis, se situent en dehors de la région des branches 28, comme on le voit le mieux sur les figures 1, 3 et 4.

Ainsi, après mise en place de la pièce rapportée 20 sur la partie réceptrice 24 de l'échangeur de chaleur, il suffit de placer la pièce de sertissage 22 puis de rabattre les pattes de sertissage 34 pour que ces dernières s'engagent dans le faisceau 10, c'est-à-dire de part et d'autre d'une ailette intercalaire 14. Ces pattes, qui sont métalliques, viennent ainsi s'ancrer dans le faisceau pour réaliser un sertissage de la pièce 22 avec ce faisceau. Il en résulte que la pièce rapportée 20 se trouve emprisonnée en "sandwich" entre la partie réceptrice 24 et la pièce de sertissage 22, ce qui assure une parfaite solidarisation de la pièce rapportée avec l'échangeur de chaleur.

De ce fait, la pièce rapportée est solidarisée à l'échangeur de chaleur, sans faire appel à un rivetage.

En outre, du fait que cette pièce rapportée est en matière plastique, il ne risque pas de se poser de problème de corrosion à l'interface avec l'échangeur de chaleur. Par ailleurs, du fait que cette pièce rapportée est en matière plastique moulée, elle peut être réalisée avec des formes très spécifiques, qui ne pourraient pas être obtenues en matière métallique.

En outre, comme la pièce de sertissage est réalisée dans une matière métallique résistant à la corrosion, il ne risque pas non plus de se poser de phénomène de corrosion à l'interface entre la pièce de sertissage et l'échangeur de chaleur.

Bien entendu, l'invention n'est pas limitée à la forme de réalisation décrite précédemment à titre d'exemple et s'étend à d'autres variantes.

L'invention s'applique tout particulièrement à l'assemblage d'une pièce rapportée, en particulier d'une pièce de fixation, sur un échangeur de chaleur propre à faire partie d'un véhicule automobile.

## Revendications

1. Dispositif d'assemblage d'une pièce rapportée sur une partie réceptrice métallique d'un échangeur de chaleur,
caractérisé en ce que la pièce rapportée (20) est en matière plastique moulée et est propre à s'adapter sur la partie réceptrice (24) et en ce qu'il est prévu en outre une pièce de sertissage (22) propre à envelopper au moins partiellement la pièce rapportée (20) et comportant des moyens de sertissage (34) propres à s'engager dans la partie réceptrice (24) pour solidariser la pièce rapportée à la partie réceptrice.

2. Dispositif selon la revendication 1, caractérisé en ce que la pièce rapportée (20) est propre à s'adapter sur la partie réceptrice (24) par coopération de formes.

3. Dispositif selon l'une des revendications 1 et 2, dans lequel la partie réceptrice (24) fait partie d'un faisceau (12) de l'échangeur de chaleur (10), caractérisé en ce que la pièce rapportée (20) a une section transversale en U avec une âme (26) et deux branches (28) dépendant de l'âme, de manière à coiffer une face d'extrémité (24) du faisceau (12).

4. Dispositif selon la revendication 3, caractérisé en ce que chacune des branches (28) de la pièce rapportée (20) comporte au moins une ouverture (36) pour le passage des moyens de sertissage (34).

5. Dispositif selon l'une des revendications 1 à 4, caractérisé en ce que la pièce rapportée (20) est en polypropylène.

6. Dispositif selon l'une des revendications 1 à 5, caractérisé en ce que la pièce de sertissage (22) comprend une plaque (32) propre à venir en appui extérieur contre la pièce rapportée (20) et à laquelle se rattachent les moyens de sertissage (34).

7. Dispositif selon l'une des revendications 1 à 6, caractérisé en ce que la pièce de sertissage (22) est réalisée dans une matière métallique résistant à la corrosion, par exemple en acier inoxydable.

8. Dispositif selon l'une des revendications 1 à 7, caractérisé en ce que les moyens de sertissage de la pièce de sertissage (22) comprennent des pattes repliables (34).

9. Dispositif selon l'une des revendications 1 à 8, caractérisé en ce que la pièce rapportée (20) est venue de moulage avec au moins une patte de fixation (30).

10. Echangeur de chaleur équipé d'au moins une pièce réceptrice (20) assemblée sur une partie réceptrice (24) dudit échangeur au moyen d'un dispositif d'assemblage selon l'une des revendications 1 à 9.
